Europäisches Patentamt

European Patent Office

Office européen des brevets

(19)

(11) Publication number: **0 177 790**
**A2**

(12) **EUROPEAN PATENT APPLICATION**

(21) Application number: **85111489.2**

(22) Date of filing: **11.09.85**

(51) Int. Cl.⁴: **F 16 F 9/08, B 60 G 7/04, B 60 G 17/04**

(30) Priority: **11.10.84 JP 152278/84 U**

(43) Date of publication of application: **16.04.86 Bulletin 86/16**

(84) Designated Contracting States: **DE FR GB**

(71) Applicant: **TOYOTA JIDOSHA KABUSHIKI KAISHA, 1, Toyota-cho Toyota-shi, Aichi-ken 471 (JP)**

(72) Inventor: **Buma, Shuuichi, 114-233, Sakanose Kosema-cho, Toyota-shi Aichi-ken (JP)**

(74) Representative: **Tiedtke, Harro, Dipl.-Ing. et al, Patentanwaltsbüro Tiedtke-Bühling-Kinne-Grupe-Pellmann-Grams-Struif Bavariaring 4 Postfach 20 24 03, D-8000 München 2 (DE)**

(54) **Air suspension.**

(57) An air suspension (10) having a shock absorber (12) surrounded by a housing (14) and an elastic body (16) to form a chamber, comprises a partition member (24) dividing the chamber into a main air chamber (18) and an auxiliary air chamber (20) and having a communicating hole (22) for affording communication between both air chambers (18, 20) and a bound stopper (26) formed of an elastic material, disposed in the main air chamber (18) and capable of closing the communicating hole (22) or a peripheral edge thereof when a wheel bounds.

- 1 -

AIR SUSPENSION

BACKGROUND OF THE INVENTION

Field of the Invention:

This invention relates to an air suspension and, more particularly, to a Macpherson strut type air suspension used for an automobile.

Description of the Prior Art:

Some air suspensions capable of adjusting the spring constant of their air springs may be used for the strut type air suspension. These air springs of suspensions are respectively constituted such that a main air chamber formed to surround a shock absorber and an auxiliary air chamber are filled with compressed air and communicate to and isolate from each other through a valve body to adjust the spring constant.

SUMMARY OF THE INVENTION

In the prior air suspension capable of adjusting the spring constant, it may be too soft when the suspension is in the soft spring condition with the main and auxiliary air chambers communicating to each other. As a result, a car body may sink deeply producing so-called "bottoming" when a wheel bounds.

In a multiple stage variable rate spring disclosed in USP 3000625, the inside of a dome structure is partitioned by a partition member having circumferentially a plurality of holes into two air chambers, the lower air chamber being provided with a movable valve element. When a wheel bounds, the valve element contacts the partition member to close a plurality of the holes. As a result, the upper air chamber is isolated from the lower one so that only the lower air chamber is subjected to the spring action to prevent the bottoming.

However, since, in said spring, both air chambers are isolated from each other by the contact of the valve element and the partition member both made of metal, the working accuracy of the valve element and/or the partition member needs to be improved. Further, the valve element and/or the partition member may be deformed with the passage of time so that the close contact property of both members may be gradually degraded to hinder the sufficient accomplishment of inherent function.

An object of the present invention is to provide an air suspension which can hold the spring constant soft when an automobile travels on a good road and produces vibration of normal amplitude, and also can harden the spring constant when the automobile travels on a bad road and produces vibration of large amplitud

A furhter object of the present invention is to provide an air suspension capable of satisfactorily isolating both air chambers from each other without needing to particularly improve the working accuracy.

A still further object of the present invention is to provide an air suspension in which the isolation of two air chambers from each other is not affected by the passage of time.

According to the present invention is provided an air suspension in which a shock absorber is surrounded by a housing and an elastic body to form a chamber. The air suspension comprises a partition member dividing said chamber into a main air chamber and an auxiliary air chamber and having a communicating hole affording communication between both air chambers, and a bound stopper formed of an elastic material, disposed in said main air chamber and capable of closing said communicating hole or the peripheral edge thereof when a wheel bounds.

According to the present invention, since the communicating hole affording communication between the main and auxiliary air chambers is closed by the bound stopper, the spring constant of the air spring can be hardened to prevent the bottoming, for example, when the automobile travels straight on a bad road. As a result, the spring constant under the soft condition can be reduced compared with the prior one to give an improved ride and to reduce vibration and noise.

Also, since the air spring constituted from the main air chamber shares a portion of impact applied to the bound stopper when the bound stopper interrupts communication between the main and auxiliary air chambers, an impact force applied to a car body from the bound stopper can be damped to improve the durability of the car body.

Since the bound stopper formed of an elastic material contacts the partition member and is compressed to isolate both air chambers from each other, the sealing property can be improved without particularly improving the working accuracy in the partition member. The sealing property is maintained for a long time even if the partition member is deformed with the passage of time.

Since the bound stopper effects the function of a valve for isolating two air chambers from each other in addition to the inherent function, any separate valves are not needed so that the number of parts can be reduced.

The other objects and features of the present invention will become apparent from the following description of a preferred embodiment of the invention with reference to the accompanying drawings.

BRIEF DESCRIPTION OF THE DRAWINGS

Fig. 1 is a sectional view showing principal parts of an air suspension according to the present invention;

Fig. 2 is a sectional view showing principal parts of an air suspension provided with a bound stopper different from that shown in Fig. 1; and

Fig. 3 is a sectional view taken along the line 3-3 in Fig. 1.

DESCRIPTION OF THE PREFERRED EMBODIMENT

An air suspension 10 has a shock absorber 12 surrounded by a housing 14 and an elastic body 16 to form a chamber, and comprises a partition member 24 dividing said chamber into a main air chamber 18 and an auxiliary air chamber 20 and having a communicating hole 22 affording communication between both air chambers, and a bound stopper 26 disposed in the main air chamber 18 and capable of closing the communicating hole 22 in bounding. The main and auxiliary air chambers 18,20 are filled with compressed air to constitute an air spring.

The shock absorber 12 is provided with a cylinder 28 and a piston rod 30 connected to a piston (not shown) disposed movably in the cylinder 28 and projecting from the cylinder 28 to the outside. The shock absorber 12 is connected to a suspension arm (not shown) on the lower end. For the shock absorber 12 is used a so-called mono-tube type of shock absorber consisting of only a single cylinder as well as a so-called twin tube type one provided with an inside and outside cylinders.

The housing 14 comprises a ceiling portion 36 having a planer portion formed annularly and an inner peripheral edge welded to a support member 34 of a support 32 over the whole periphery, a first tubular portion 37 extending from the ceiling portion integrally, and a second tubular portion 38. In the embodiment shown in the drawing, a plurality of bolts 40 (only one is shown in the drawing) are fixed on the ceiling portion 36 of the housing 14 by welding in an air tight manner and extend through a car body 42. Nuts 41 are screwed onto the bolts 40 to connect the housing 14 to the car body.

To the first tubular portion 37 of the housing 14 is welded an outer peripheral edge of the partition member 24 formed of a plate material, and an inner peripheral edge of the partition member 24 is welded to the support member 34 to be spaced from the piston rod 30. Below and above the partition member are defined respectively the main air chamber 18 and the auxiliary air chamber 20. Said space provides the communicating hole 22 which affords communication between the main and auxiliary air chambers 18,20 as will be later described. The second tubular portion 38 of the housing 14 is fitted on the first tubular portion 37 and welded thereto over the whole periphery.

In this embodiment, the elastic body 16 is a diaphragm formed cylindrically of rubber. The diaphragm is folded back at the approximately central portion and an outside end thereof is sandwiched between the second tubular portion 38 of the housing 14 and a ring 44 which is caulked to fix the outside end to the housing 14. An inside end of the diaphragm is fitted on a cylindrical air piston 46 welded to the cylinder 28.

The bound stopper 26 is cylindrically formed of an elastic material, such as rubber or urethane-foam. In the embodiment shown, the bound stopper 26 has recesses 27 extending circumferentially on the outer and inner peripheral surfaces and is formed into a flexible shape.

The bound stopper 26 is attached to a stopper 29 provided on an opening end of the cylinder 28 to face the partition member 24. When a wheel (not shown) bounds, the bound stopper 26 abuts against the partition member 24 to be deformed so that further bound is restrained. The effective diameter D of the top of the bound stopper 26 is formed larger than the bore d of the communicating hole 22 in the partition member 24, and when the bound stopper 26 abuts against

0177790

the partition member 24 to be deformed, the bound stopper 26 closes the communicating hole 22 or a peripheral edge thereof to interrupt air movement between the main and auxiliary air chambers 18,20.

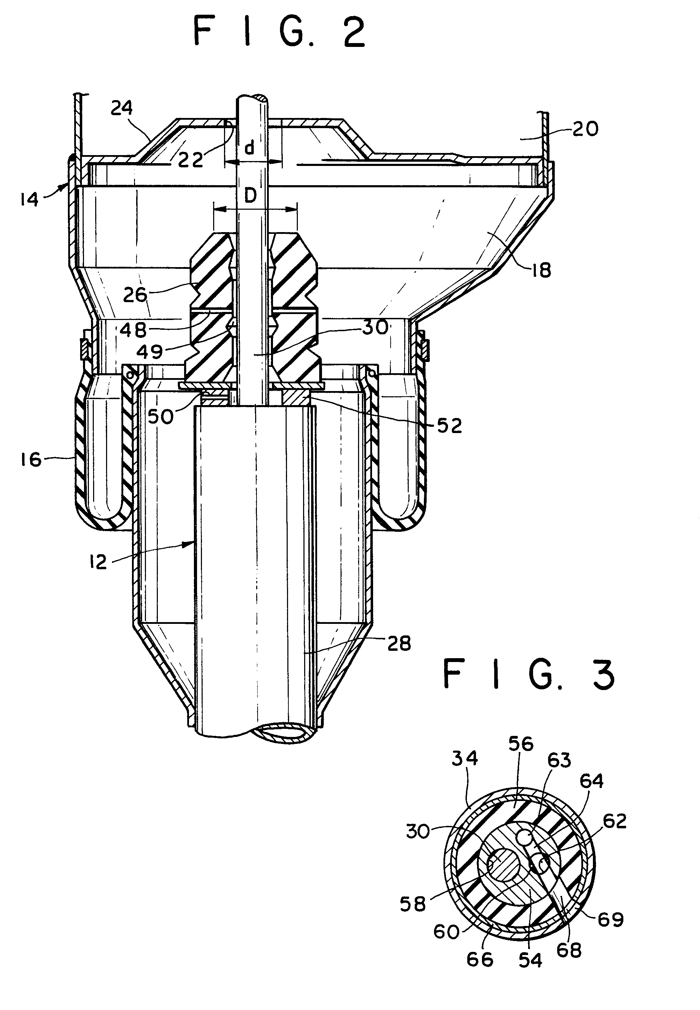

In an embodiment shown in Fig. 2, the bound stopper 26 is provided in the intermediate portion with a plurality (two are shown in the drawing) of small diameter paths 48 for affording communication between the inner and outer peripheral surfaces. When a wheel bounds and the bound stopper 26 abuts against the partition member 24, since radial air movement through an aperture between the partition member 24 and the bound stopper 26 is interrupted but the communicating hole 22 itself is not completely closed, air flow passing through the communicating hole 22, a space 49 between the bound stopper 26 and the piston rod 30 and the paths 48 is produced between the main and auxiliary air chambers 18,20. Thus, the dynamic spring constant of the air spring can be varied by the throttling action of the paths 48 to change a ride and the controllability. When the stroke of bound is further increased, the bound stopper 26 is deformed to close the paths 48. As a result, the main and auxiliary air chambers 18,20 are isolated from each other completely.

In the embodiment in Fig. 2, a stopper 52 having a small diameter path 50 is mounted in an opening of the cylinder 28 of the shock absorber 12. Even when the bound stopper 26 is deformed to close the paths 48, since a slight gap exists between the bound stopper 26 and the piston rod 30, air can flow through the gap and the path 50 to vary the dynamic spring constant. The provision of either of the path 48 in the bound stopper 26 or the path 50 in the stopper 52 will do.

The support 32 is provided with a rigid member 54, a bushing 56 formed of rubber and the support member 34. The rigid member 54 is formed of high rigidity material like iron having a circular section. As shown in Fig. 3, the rigid member 54 is provided with a hole 58 through which the piston rod 30 extends, a hole 62 in which a valve body 60 is disposed, a hole 63 opened parallel to the hole 62 from a lower end face to an intermediate position and a hole 64 crossing the hole 62 and extending from the hole 63 to an outer peripheral surface.

The bushing 56 is vulcanized and bonded on an inner peripheral edge to the rigid member 54 and on an outer peripheral edge to a tube 66 which is press fitted into the support member 34 in an air tight manner. The bushing 56 has a hole 68 communicating to the hole 64 in the rigid member 54. As a result, the main and auxiliary air chambers 18,20 communicate to each other through the communicating hole 22, a hole 35 provided in the support member 34, the holes 63,64 in

- 10 -

the rigid member 54, the hole 68 in the bushing 56 and a hole 69 provided opposed to the hole 68 in the tube 66 and the support member 34.

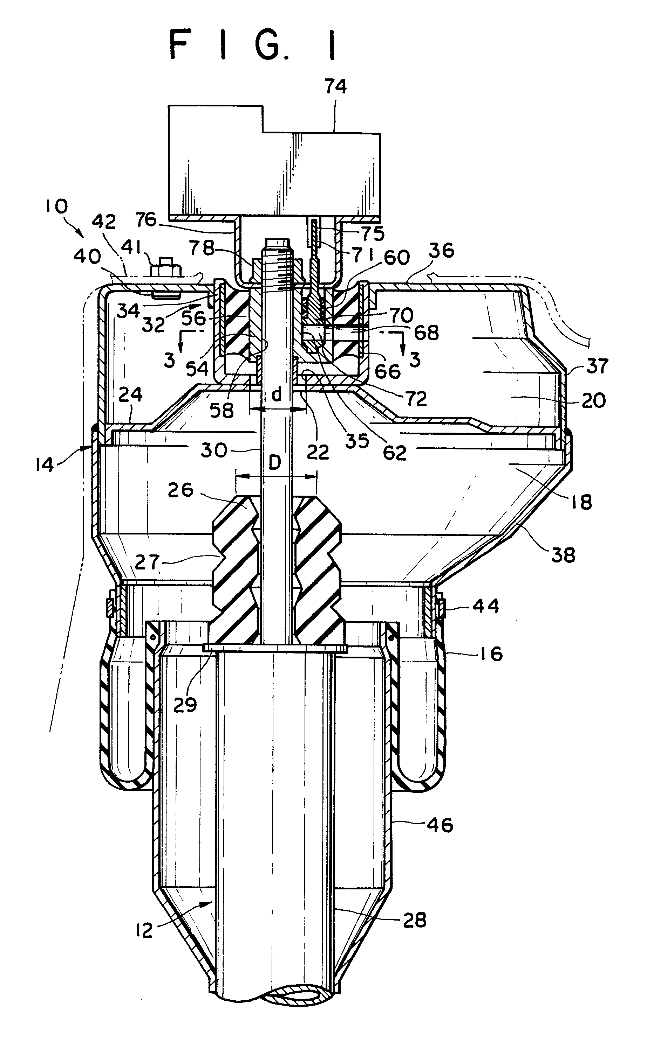

The valve body 60 has integrally a slide portion 70 and a flat portion 71 extending upward through a reduced diameter portion, the slide portion 70 being provided with a diametrally opened hole 72 capable of communicating to the hole 64 in the rigid member 54. The valve body 60 is rotatably inserted into the hole 62 in the rigid member 54 under an air tight condition. The valve body 60, when rotated from the communicating position in Fig. 1 by 90° for example, the main air chamber 18 is isolated from the auxiliary air chamber 20.

An actuator 74 consisting of a motor and a reduction gear is well known per se. A bracket 76 of a housing is sandwiched between a nut 78 screwed onto the piston rod 30 and the rigid member 54 to be supported above the piston rod 30. The flat portion 71 of the valve body 60 is inserted into a slit 75 in an output shaft of the actuator 74.

When an automobile travels, the motor of the actuator 74 is operated to afford or interrupt communication between the main and auxiliary air chambers 18,20 for adjusting the spring constant of the air spring. When the main and auxiliary air chambers 18, 20 communicate to each other, both air chambers are subjected to the spring action so that the volume of the air spring is increased to present the soft spring property of the air spring. When the main and auxiliary air chambers 18,20 are isolated from each other, the main air chamber is subjected to the spring action so that the volume of the air spring is decreased to present the hard spring property of the air spring.

When the main and auxiliary air chambers 18,20 communicate to each other and the automobile travels on a good road, the amplitude of vibration applied to the shock absorber 12 is small. As a result, the air spring is held to have the soft spring property. However, when the automobile gets to travel on a bad road and the bound stopper 26 abuts against the partition member 24 to be deformed, the communicating hole 22 or the peripheral edge thereof in the partition member 24 is closed. As a result, only the main air chamber 18 is subjected to the spring action and the spring property is suddenly raised to provide the hard spring property and strengthen the non-linear property. Thus, the bottoming can be prevented.

In the aforementioned embodiment, the chamber is devided by the partition member into main and auxiliary air chambers. However, the present invention may be worked by a suspension which has a main air chamber, an auxiliary air chamber and a valve body disposed in a path for affording communication between both air chambers.

0177790
- 13 -

What is claimed is:

1.    An   air   suspension   having   a   shock    absorber
surrounded  by a housing and an elastic body to form  a
chamber  characterized  by  a  partition  member  (24)
dividing  said chamber into a main air chamber (18) and
an    auxiliary    air    chamber   (20)    and    having    a
communicating  hole  (22) for  affording  communication
between  both  air  chambers  (18,20) and  by  a  bound
stopper    (26)   formed   of   an   elastic   material    and
disposed  in said main air chamber (18) and capable  of
closing  said communicating hole (22) or  a  peripheral
edge thereof when a wheel bounds.

2.    An air suspension as claimed in claim 1,  wherein
said  bound  stopper (26) has at least  a  recess  (27)
extending circumferentially on at least one of an inner
peripheral surface and an outer peripheral surface.

3.    An air suspension as claimed in  claim 1, wherein
an   inner   peripheral  surface of said bound stopper  is
disposed spacedly from a piston rod (30) of said  shock
absorber  (12) and said bound stopper (26) has at least
one  path  (48)  extending from  the  inner  peripheral
surface  to  an outer one to vary  the  dynamic  spring
constant.

4.    An air suspension as claimed in  claim 1, wherein an inner peripheral surface of said bound stopper  (26) is  disposed  spacedly from a piston rod (30)  of  said shock  absorber  (12)  and said bound stopper  (26)  is fixed  to a stopper (52) provided on an upper end of  a cylinder (28) of said shock absorber (12), said stopper (52)  having  at  least one  path  (50)  for  affording communication  between  said  space (49) and  main  air chamber (18) to vary the dynamic spring constant.

5.    An  air  suspension characterized by a main  air chamber  (18)  surrounding  a  shock  absorber  and  an auxiliary air chamber (20),  a valve body (60) disposed in a path for affording communication between both  air chambers  (18,20) and a bound stopper (26) formed of an elastic material and disposed in said main air  chamber (18)  and  capable  of  closing an opening  (22)  or  a peripheral  edge thereof of said path to said main  air chamber (18) when a wheel bounds.

6.    An air suspension as claimed in  claim 5, wherein an inner peripheral surface of said bound stopper  (26) is  disposed  spacedly from a piston rod (30)  of  said shock  absorber (12) and said bound stopper (26) has at least one path (48) extending from the inner peripheral surface  to  an outer one to vary  the  dynamic  spring constant.

7.     An air suspension as claimed in  claim 5, wherein an  inner peripheral surface of said bound stopper (26) is  disposed  spacedly from a piston rod (30)  of  said shock  absorber  (12) and said  bound  stopper  (26)  is fixed  to a stopper (52) provided on an upper end of  a cylinder (28) of said shock absorber (12),  the stopper (52)  having  at  least  one path (50)  for  affording communication  between  said space (49)  and  main  air chamber (18) to vary the dynamic spring constant.

F I G. I

0177790

# F I G. 2

# F I G. 3